# FASCICULE DE BREVET EUROPEEN

(11) **EP 2 644 407 B1**
(45) Date de publication et mention de la délivrance du brevet: **18.07.2018**
(21) Numéro de dépôt: 13161577.5
(22) Date de dépôt: 28.03.2013
(51) Int. Cl.: B43K 19/02, B43K 19/14, B43K 19/16, B43K 19/18, C09D 13/00, A45D 40/20, B43K 19/00

(54) **Crayon expanse et son procédé de fabrication**
Expandierter Stift und sein Herstellungsverfahren
Expanded pencil and method for manufacturing same

(30) Priorité: 28.03.2012 FR 1252767
(43) Date de publication de la demande: 02.10.2013
(73) Titulaire: MAPED, 74370 Argonay (FR)
(72) Inventeur: Jacquet, Emmanuel, 74270 CHILLY (FR); Dufournet, François, 74600 SEYNOD (FR)
(74) Mandataire: Croonenbroek, Thomas Jakob

(56) Documents cités:
- JP-U- 51 038 067
- US-A- 3 625 788

## Description

La présente invention concerne un crayon utilisable pour écrire, tracer, dessiner, colorier, sur tout support d'écriture, comprenant une partie mine et une partie enveloppe entourant la partie mine, et constitué au moins partiellement en matériau synthétique.

L'intérêt de remplacer, par des matériaux synthétiques, tout ou partie des matières naturelles traditionnellement utilisées, graphite, argile et/ou cire pour la mine et bois pour l'enveloppe est multiple. Principalement, il réside dans la simplification et la rentabilité des procédés de fabrication, aujourd'hui réalisée généralement par extrusion, l'augmentation du dépôt de matière qui constitue la mine, sur le support d'écriture, l'ajustement de la dureté de la mine, l'amélioration de la taillabilité du crayon, et aussi la variété dans l'esthétique du crayon.

Selon les documents FR2674179A1 et FR2802148A, un crayon synthétique est décrit, comprenant une mine en un matériau thermoplastique, une enveloppe en un matériau thermoplastique expansé, ainsi qu'une couche de protection de la mine prévue entre la mine et l'enveloppe, ladite couche de protection étant en un matériau thermoplastique non expansé.

La couche d'enveloppe est généralement expansée, ceci pour réduire la quantité de matériau de base nécessaire à sa fabrication, dans un intérêt économique, ce qui permet au passage d'alléger le crayon. La couche de protection a pour but de protéger la mine des effets de l'expansion de l'enveloppe provoquant l'apparition d'aspérités sur la mine qui sont inesthétiques sur la portion taillée du crayon et qui affaiblissent la tenue de la mine. Lors du refroidissement des matériaux constitutifs de la mine d'un crayon, objet du document FR2674179A1, des fissurations peuvent se former résultant des retraits importants desdits matériaux et à l'origine de casses de la mine lors du taillage du crayon. Le document FR2802148A apporte une solution à cet inconvénient en ayant recours à une couche de protection en un matériau thermoplastique possédant une température de solidification inférieure à celle du matériau de la mine, ce qui lui permet d'absorber les contraintes de la mine lors du refroidissement de cette dernière, et ainsi de limiter les fissurations de la mine.

Cette solution n'est cependant pas tout à fait satisfaisante car la pression exercée sur la couche de protection est telle que la migration de l'agent d'expansion dans la mine n'est pas complètement empêchée et les inconvénients précités ne sont pas totalement évités.

Les auteurs de la présente invention ont mis au point un procédé de fabrication d'un crayon au cours duquel un équilibre dynamique s'établit entre les différentes couches, ce qui permet, après refroidissement, d'obtenir un crayon dont la mine possède toutes les qualités requises.

Le concept inventif consiste à incorporer dans chacune des parties mine et enveloppe au moins un agent d'expansion. Lors de l'expansion desdites parties, les pressions vont s'équilibrer et les contraintes se libérer. Plus précisément, au cours de l'étape critique de refroidissement des matériaux thermoplastiques, la co-expansion desdites parties permet de les maintenir dans un état déformable de sorte qu'à l'issue du procédé de fabrication, d'une part le retrait de la mine est limité et d'autre part ce retrait est comblé.

Ainsi, l'invention concerne un crayon comprenant une partie mine, ladite partie mine comprenant ou consistant en une mine, et une partie enveloppe entourant la partie mine, ladite partie enveloppe étant en un matériau synthétique expansé, et la partie mine étant au moins partiellement expansée.

L'invention se décline en deux variantes, une première variante selon laquelle la partie mine consiste en ladite mine seule et est expansée, une seconde variante selon laquelle la partie mine comprend la mine et une couche intermédiaire entourant la mine, ladite couche intermédiaire étant en une matière synthétique expansée.

La présence d'agent(s) d'expansion dans la partie mine permet de compenser les effets de ceux de la partie enveloppe et ainsi évite les répercussions négatives de l'expansion de la partie enveloppe sur la partie mine. En outre, sa (leur) présence dans la mine, le cas échéant, permet d'ajuster très finement la dureté de la mine.

La première variante est plus particulièrement destinée, sans y être restreinte, aux mines dites dures, la seconde l'est, aux mines dites tendres.

Les notions de mine dure et de mine tendre sont bien connues de l'homme du métier. S'agissant des mines pour crayons à papier, elles répondent à une définition qui figure dans la norme internationale ISO 9180:1988. Elles contiennent de l'argile et du graphite, les mines étant d'autant plus tendres que leur teneur en argile est faible et leur teneur en graphite est élevée. Les crayons de couleurs ont une mine à base d'argile, de pigments et de cire, dont la dureté est fonction de la proportion de ses constituants. Pour des raisons de sécurité, les crayons de couleurs destinés aux enfants ont des mines plutôt dures, les crayons de couleurs à mines plus tendres sont appropriés à des dessins plus artistiques ou des techniques de dessin spécifiques. Mais la vocation de la première variante aux mines dures et de la seconde variante aux mines tendres n'est pas restrictive, la première variante peut être mise en oeuvre pour des mines moins dures, sous réserve de conserver les qualités requises de résistance de la mine. De même, la seconde variante peut être utilisée pour des mines moins tendres.

L'une et l'autre des variantes ci-dessus, et de manière générale, les procédés de l'invention s'adaptent à la fabrication de tout crayon quel que soit son diamètre, quel que soit le rapport du diamètre de la partie enveloppe à celui de la partie mine.

Selon la première variante, la mine est expansée, selon la seconde variante, la mine est expansée ou non. De manière générale, l'expansion de la mine est moins importante que celle de la partie enveloppe. Lorsque la mine est expansée, la nature de l'agent d'expansion ainsi que sa proportion dans le matériau constitutif de la mine sont déterminées en sorte que ses propriétés mécaniques, telles que sa résistance au taillage, sa résistance à la chute, ne soient pas altérées.

De manière avantageuse, au moins la partie enveloppe, et éventuellement la couche intermédiaire de la partie mine, voire la mine, sont en des matériaux thermoplastiques expansés. Il peut être recouru au même ou aux mêmes matériaux thermoplastiques pour la partie enveloppe et la partie mine, voire la mine, ou à des matériaux thermoplastiques différents. Si les parties sont constituées de matériaux thermoplastiques différents, on peut envisager de leur incorporer un ou des agents compatibilisants pour améliorer le contact ou liaison entre lesdites parties.

La partie enveloppe peut en outre comprend une ou plusieurs charges d'origine minérale ou végétale. Qu'elle soit expansée ou non, et en fonction de sa destination, la mine peut comprendre au moins du graphite ou des pigments, de l'argile et/ou des cires.

Pour fabriquer un crayon selon l'invention, on retient un agent d'expansion dont on peut contrôler l'expansion. L'expansion peut être d'origine physique ou chimique. Selon un mode de réalisation préféré d'un crayon de l'invention, le ou les agents d'expansion d'au moins l'une des parties expansées et avantageusement de toutes les parties expansées sont choisis parmi les agents thermoexpansibles. On préfère un tel agent dont le profil d'expansion en fonction de la température est prédéterminé, l'expansion étant déclanchée à une température donnée, se poursuivant de manière contrôlée par élévation de la température jusqu'à une température maximale caractéristique dudit agent et pouvant être stoppée à tout moment par refroidissement.

Plus avantageusement encore, il s'agit d'agents d'expansion thermique à cellules fermées, par exemple constitués de particules expansibles et étanches, dont la paroi est en un matériau polymère extensible. Sous l'effet de la température, une réaction chimique ou physique se produit à l'intérieur desdites particules, engendrant une augmentation du volume interne desdites particules et leur expansion. Ainsi, le ou les agents d'expansion peuvent être choisis parmi des microsphères ayant une coque ou paroi plastique et enfermant un gaz ou mélange gazeux, par exemple à base d'hydrocarbures, tels que l'isopentane ou l'isooptane. Une élévation de la température va provoquer une augmentation de la pression interne des microsphères qui vont gonfler pour atteindre une taille pouvant être multipliée par 5, voire plus. En fonction du résultat recherché relativement à la souplesse, au poids, et toute autre propriété du matériau dans lequel l'agent est incorporé, l'expansion est menée à son terme ou non. Ainsi, le matériau traité sera porté à une température variant entre celle à laquelle le phénomène d'expansion est déclanché et celle (Tₘₐₓ) à laquelle le volume maximal de la microsphère est atteint. D'autres paramètres desdites microsphères peuvent être pris en considération en vue du résultat recherché, et notamment, la taille initiale des microsphères, ainsi que leur teneur dans le matériau à traiter. Ainsi, lorsque la mine est expansée, on retient des microsphères de petite taille, afin que l'expansion n'affecte pas les propriétés mécaniques de la mine.

Comme dit précédemment, l'expansion de l'agent est contrôlée ; ceci signifie que si l'agent d'expansion ne consiste qu'en des microsphères identiques, l'expansion sera homogène. Une telle expansion sera recherchée pour la mine. Si une structure irrégulière est souhaitée, ce qui peut être le cas de la partie enveloppe afin d'imiter les crayons à base de matières naturelles comme le bois, l'agent d'expansion comprend des microsphères de tailles différentes, entraînant une expansion contrôlée mais permettant d'obtenir une structure hétérogène.

Un crayon de l'invention peut en outre comporter une couche de finition telle qu'un vernis, déposée sur la partie enveloppe. Cette couche est exempte d'agents d'expansion afin d'obtenir un bon aspect de finition du crayon. Elle est en un matériau compatible avec celui de la partie enveloppe. Avantageusement, le matériau ou mélange de matériaux de la couche de finition et celui de la partie enveloppe sont les mêmes. Dans cette forme de réalisation, la couche de finition et la partie enveloppe sont parfaitement différenciées, d'une part en raison de l'expansion du matériau de la partie enveloppe, et d'autre part en raison d'une épaisseur différente.

Des caractéristiques de mises en oeuvre avantageuses d'agents d'expansion tels que décrits ci-dessus sont ci-après exposées, elles sont à considérer seules ou en combinaison.

Lorsque les parties à expanser sont en un ou des matériaux thermoplastiques, ce ou ces derniers et le ou les agents d'expansion thermique sont de préférence mis en oeuvre à des températures similaires.

Préférentiellement, les matériaux thermoplastiques retenus pour la partie enveloppe et la partie mine, dont la mine et la couche intermédiaire le cas échéant, sont choisis parmi des polymères styréniques, tels que le polystyrène (PS), les copolymères du styrène, par exemple, acrylonitrile butadiène styrène (ABS), des polyoléfines, des biopolymères comme des polymères issus de la biomasse ou au moins partiellement biodégradables, comme l'acide polylactique (PLA).

La partie enveloppe n'ayant pas d'autres fonctions techniques que celles de préhension du crayon et de protection de la partie mine, son faible poids étant le but principalement recherché, la proportion en agent(s) d'expansion sera supérieure à celle de la partie mine. Ainsi on peut réduire la densité du matériau constitutif d'environ 50% de sa densité initiale. De préférence, le ou les agents d'expansion sont introduits dans le matériau de la partie enveloppe en une proportion variant de 0,5 à 3% en poids, par rapport au poids total de la partie enveloppe. Dans cette partie enveloppe, les microsphères à l'état expansé ont une taille variant de 40 à 120 µm. Selon les microsphères employées, cette taille après expansion peut être obtenue à partir de microsphères ayant une taille initiale variant de 10 à 40 µm. Selon une mise en oeuvre particulière, les microsphères utilisées ont toutes la même taille, ou une taille similaire, c'est-à-dire pouvant être plus ou moins grande avec des écarts maximum d'environ 5 µm. Mieux encore, et comme mentionné précédemment, le ou les agents d'expansion peuvent répondre à une distribution de microsphères spécifique. A titre préférentiel, ledit ou lesdits agents comprennent des microsphères dont la taille, à l'état non expansé, varie de 16 à 28 µm et d'autres dont la taille, à l'état non expansé, varie de 28 à 40 µm, une telle distribution permettant de reproduire la structure hétérogène du bois naturel. A titre d'exemple, ledit ou lesdits agents comprennent des microsphères dont la taille, à l'état expansé, est de l'ordre de 80 µm et des microsphères dont la taille, à l'état expansé, est de l'ordre de 120 µm.

La partie mine, et en particulier la mine, ayant un rôle fonctionnel, l'agent d'expansion introduit dans le matériau de la partie mine a une proportion plus faible que dans la partie enveloppe. De préférence, cette proportion varie de 0,1 à 1% en poids, par rapport au poids total de la partie mine. L'agent d'expansion comprend avantageusement des microsphères dont la taille, à l'état expansé, varie de 20 à 40 µm. Ceci peut être obtenu à partir de microsphères dont la taille, à l'état expansé, varie de 5 à 16 µm. Cette gamme de tailles est préférée pour limiter l'expansion de la mine afin de ne pas altérer ses propriétés mécaniques, tout en conservant une force d'expansion s'opposant à celle de la couche de protection ou de la partie enveloppe.

L'invention concerne aussi des procédés de fabrication d'un crayon tel que défini précédemment.

De préférence, un tel crayon est fabriqué par co-extrusion des différents matériaux constitutifs des parties enveloppe et mine, respectivement. Par matériau constitutif, on entend un matériau comprenant l'ensemble des ingrédients constitutifs de la partie mine et de la partie enveloppe, respectivement, dont charges et tout additif appropriés.

La coextrusion est une technique parfaitement maîtrisée par l'homme du métier, y compris dans le domaine de la fabrication des crayons.

Plus particulièrement, l'invention concerne les deux procédés suivants :
- Un procédé de fabrication selon lequel on co-extrude le ou les matériaux constitutifs et l'agent d'expansion de la mine et le ou les matériaux constitutifs et l'agent d'expansion de la partie enveloppe autour de la mine, et
- Un procédé de fabrication selon lequel on co-extrude le ou les matériaux constitutifs et éventuellement l'agent d'expansion de la mine, le ou les matériaux constitutifs et l'agent d'expansion de la couche intermédiaire autour de la mine et le ou les matériaux constitutifs et l'agent d'expansion de la partie enveloppe autour de la couche intermédiaire.

Avantageusement, le ou les matériaux constitutifs de la partie mine et/ou de la partie enveloppe et le ou les agents d'expansion thermique sont mis en oeuvre à des températures similaires, la température de mise en oeuvre du ou des matériaux constitutifs n'étant pas supérieure à celle de mise en oeuvre du ou des agents d'expansion thermique.

L'invention sera mieux comprise à l'aide de la description qui suit, en référence aux figures annexées représentant, à titre d'exemple, un crayon selon différentes formes de réalisation de l'invention.
La figure 1 est une vue partielle en perspective d'un crayon dont la partie mine comprend une couche intermédiaire et la mine.
La figure 2 est vue en coupe transversale d'un crayon dont la partie mine consiste en la mine, sur laquelle le matériau constitutif des différentes parties est rendu visible.

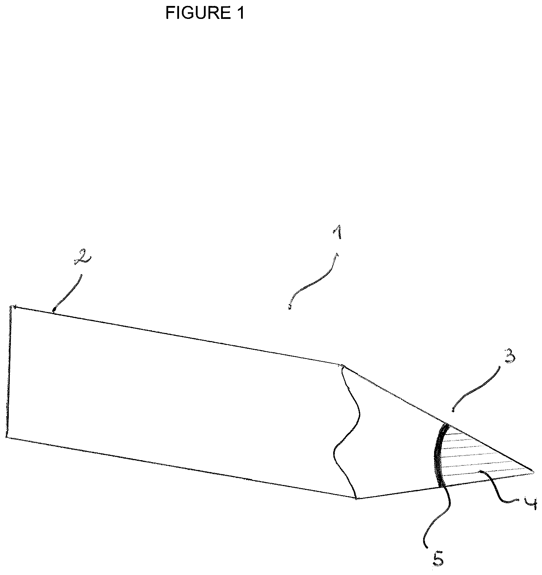

La figure 1 représente un crayon 1 qui comprend une partie enveloppe 2 et une partie mine 3. Selon cette forme de réalisation, la partie mine 3 comporte une mine 4 et une couche intermédiaire 5 entourant la mine 4. La couche de protection 5 est elle-même entourée de la partie enveloppe 2.

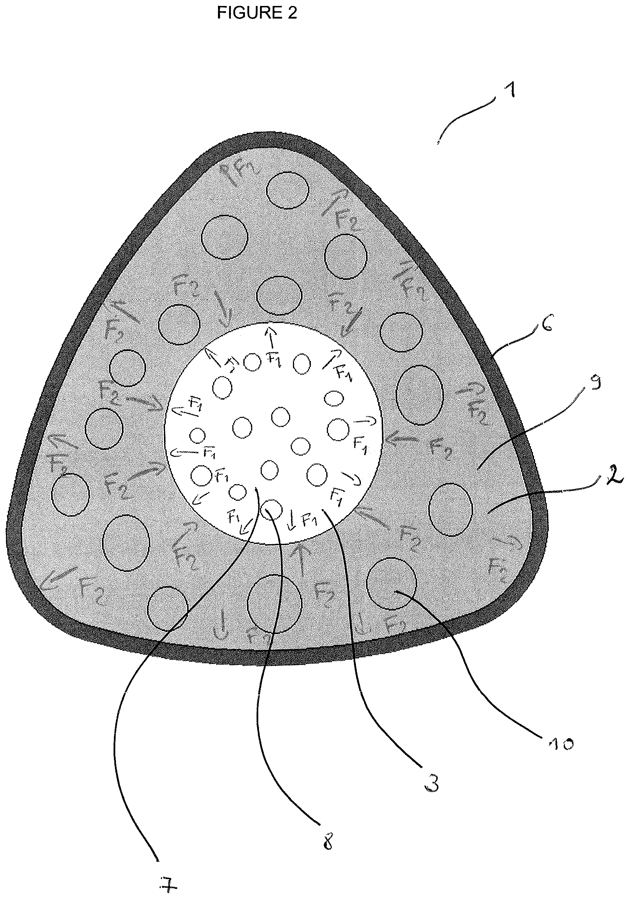

La figure 2 représente une coupe transversale d'un crayon 1 comprenant une mine 3 directement entourée d'une partie enveloppe 2. Cette dernière est revêtue d'un vernis 6.

La mine 3 est un matériau 7 expansé à l'aide de microsphères 8 dont on voit qu'elles sont toutes sensiblement de même taille après expansion. Ceci permet d'obtenir un matériau expansé de manière homogène afin de garantir les propriétés mécaniques de la mine 3. La partie enveloppe 2 est en un matériau 9 expansé à l'aide de microsphères 10 toutes sensiblement de même taille après expansion. La taille des microsphères expansées 10 est supérieure à celle des microsphères expansées 8 de la mine 3. On observe sur cette figure l'équilibre entre les forces F1 qui se sont exercées au cours de l'expansion de la mine 3 et celles F2 qui se sont exercées au cours de l'expansion de la partie enveloppe 2. Cet équilibre permet de limiter le retrait du matériau 7 de la mine 3 et d'en empêcher les inconvénients.

L'exemple ci-après illustre la fabrication d'un crayon selon l'invention d'après la seconde variante.

Le crayon est un crayon de couleur fabriqué à partir des ingrédients ci-après, les pourcentages des ingrédients étant exprimés en poids par rapport au poids total de chacune des mine 4, couche intermédiaire 5 et partie enveloppe 2 :
Mine de crayon de couleur :
- Matrice polymère de la famille des styréniques : 20 à 60%
- Charge minérale tel que kaolin, carbonate de calcium : 5 à 30%
- Cire : 1 à 8%
- Plastifiant : 0,5 à 5%
- Pigment : 10 à 30%
- Agent d'expansion : 0,1 à 1% de microsphères ayant une taille, à l'état non expansé, variant de 6 à 10 µm, et une taille, à l'état expansé, d'environ 40 µm.

Couche intermédiaire de protection :
- Matrice polymère de la famille des styréniques : 80 à 100%
- Charges minérales : 5 à 20%
- Agent d'expansion : 0,1 à 1% de microsphères ayant une taille, à l'état non expansé, variant de 6 à 10 µm, et une taille, à l'état expansé, d'environ 40 µm.

Partie enveloppe :
- Matrice polymère de la famille des styréniques : 20 à 60%
- Charges minérales : 10 à 30%
- Charges végétales : 10 à 30%
- Colorant : 1 à 3%
- Agent d'expansion : 0,5 à 3% de microsphères ayant une taille, à l'état non expansé, variant de 18 à 24 µm, et une taille, à l'état expansé, d'environ 80 µm.

Le crayon est obtenu par co-extrusion des ingrédients précités pour obtenir la mine, la couche intermédiaire entourant la mine et la partie enveloppe extrudée autour de la couche intermédiaire.

## Revendications

1. Crayon (1) comprenant une partie mine (3) comprenant ou consistant en une mine (4), et une partie enveloppe (2) entourant la partie mine (3), ladite partie enveloppe (2) étant en un matériau synthétique (9) expansé, **caractérisé en ce que** la partie mine (3) est au moins partiellement expansée.

2. Crayon selon la revendication 1, **caractérisé en ce que** la partie mine (3) consiste en ladite mine (4) et est expansée.

3. Crayon selon la revendication 1, **caractérisé en ce que** la partie mine (3) comprend ladite mine (4) et une couche intermédiaire (5) entourant la mine (4), ladite couche intermédiaire (5) est en un matériau à base d'un polymère synthétique expansé.

4. Crayon selon la revendication 3, **caractérisé en ce que** ladite mine (4) est non expansée.

5. Crayon selon la revendication 3, **caractérisé en ce que** ladite mine (4) est expansée.

6. Crayon selon l'une quelconque des revendications 1 à 5, **caractérisé en ce que** la mine (4) comprend du graphite, de l'argile et/ou des cires.

7. Crayon selon l'une quelconque des revendications 1 à 6, **caractérisé en ce qu'**au moins la partie enveloppe (2) et éventuellement la couche intermédiaire (2) de la partie mine (3) sont à base de matériaux thermosplastiques expansés.

8. Crayon selon l'une quelconque des revendications 1 à 7, **caractérisé en ce que** les parties expansées résultent de l'action d'agents d'expansion choisis parmi les agents d'expansion thermique à cellules fermées.

9. Crayon selon la revendication 8, **caractérisé en ce que** les agents d'expansion sont choisis parmi les agents d'expansion physique.

10. Crayon selon la revendication 9, **caractérisé en ce que** lesdits agents d'expansion sont choisis parmi des microsphères thermoexpansibles.

11. Crayon selon l'une quelconque des revendications 1 à 10, caractérisé en ce l'agent d'expansion est introduit dans le matériau de la partie enveloppe (2) en une proportion variant de 0,5 à 3% en poids, par rapport au poids total de la partie enveloppe.

12. Crayon selon la revendication 11, **caractérisé en ce que** l'agent d'expansion (10) comprend des microsphères dont la taille, à l'état expansé, varie de 40 à 120 µm.

13. Crayon selon la revendication 12, **caractérisé en ce que** l'agent d'expansion (10) comprend des microsphères dont la taille, à l'état expansé, est de l'ordre de 80 µm et des microsphères dont la taille, à l'état expansé, est de l'ordre de 120 µm.

14. Crayon selon l'une quelconque des revendications 1 à 13, **caractérisé en ce que** l'agent d'expansion (8) est introduit dans le matériau (7) de la partie mine (3) en une proportion variant de 0,1 à 1% en poids, par rapport au poids total de la partie mine (3).

15. Crayon selon la revendication 14, **caractérisé en ce que** l'agent d'expansion (8) comprend des microsphères dont la taille, à l'état expansé, varie de 20 à 40 µm.

16. Crayon selon la revendication 2 et l'une quelconque des revendications 6 à 15, **caractérisé en ce que** la mine (4) est une mine dite dure.

17. Crayon selon l'une quelconque des revendications 3 à 15, **caractérisé en ce que** la mine (4) est une mine dite tendre.

18. Procédé de fabrication d'un crayon selon la revendication 2 et l'une quelconque des revendications 6 à 16, **caractérisé en ce qu'**on co-extrude le ou les matériaux thermoplastiques (7) et l'agent d'expansion (8) de la mine (4) et le ou les matériaux thermoplastiques (9) et l'agent d'expansion (10) de la partie enveloppe (2) autour de la mine (4).

19. Procédé de fabrication d'un crayon selon la revendication 4 et l'une quelconque des revendications 3 à 15 et 17, **caractérisé en ce qu'**on co-extrude le ou les matériaux constitutifs (7) et éventuellement l'agent d'expansion (8) de la mine (4), le ou les matériaux constitutifs et l'agent d'expansion de la couche intermédiaire (5) autour de la mine (4) et le ou les matériaux constitutifs (9) et l'agent d'expansion (10) de la partie enveloppe (2) autour de la couche intermédiaire (5).

20. Procédé de fabrication selon la revendication 18 ou 19, **caractérisé en ce que** le ou les matériaux constitutifs de la partie mine et/ou de la partie enveloppe et le ou les agents d'expansion thermique sont mis en oeuvre à des températures similaires, la température de mise en oeuvre du ou des matériaux constitutifs n'étant pas supérieure à celle de mise en oeuvre du ou des agents d'expansion thermique.

## Patentansprüche

1. Stift (1), umfassend einen Minenteil (3), der eine Mine (4) aufweist oder daraus besteht, und einen Hüllenteil (2), der den Minenteil (3) umgibt, wobei der Hüllenteil (2) aus einem expandierten Kunststoff (9) besteht, **dadurch gekennzeichnet, dass** der Minenteil (3) mindestens teilweise expandiert ist.

2. Stift nach Anspruch 1, **dadurch gekennzeichnet, dass** der Minenteil (3) aus der Mine (4) besteht und expandiert ist.

3. Stift nach Anspruch 1, **dadurch gekennzeichnet, dass** der Minenteil (3) die Mine (4) und eine Zwischenschicht (5) aufweist, die die Mine (4) umgibt, wobei die Zwischenschicht (5) aus einem Material auf der Basis eines expandierten synthetischen Polymers ist.

4. Stift nach Anspruch 3, **dadurch gekennzeichnet, dass** die Mine (4) nicht expandiert ist.

5. Stift nach Anspruch 3, **dadurch gekennzeichnet, dass** die Mine (4) expandiert ist.

6. Stift nach einem der Ansprüche 1 bis 5, **dadurch gekennzeichnet, dass** die Mine (4) Graphit, Ton und/oder Wachse umfasst.

7. Stift nach einem der Ansprüche 1 bis 6, **dadurch gekennzeichnet, dass** mindestens der Hüllenteil (2) und eventuell die Zwischenschicht (2) des Minenteils (3) auf Basis von expandierten thermoplastischen Materialien sind.

8. Stift nach einem der Ansprüche 1 bis 7, **dadurch gekennzeichnet, dass** die expandierten Teile durch das Einwirken von Treibmitteln entstehen, die aus den thermischen Treibmitteln mit geschlossenen Zellen ausgewählt sind.

9. Stift nach Anspruch 8, **dadurch gekennzeichnet, dass** die Treibmittel aus den physikalischen Treibmitteln ausgewählt sind.

10. Stift nach Anspruch 9, **dadurch gekennzeichnet, dass** die Treibmittel aus den thermisch expandierbaren Mikrosphären ausgewählt sind.

11. Stift nach einem der Ansprüche 1 bis 10, **dadurch gekennzeichnet, dass** das Treibmittel in das Material des Hüllenteils (2) in einem Anteil eingebracht wird, der von 0,5 bis 3 Gew.% bezogen auf das Gesamtgewicht des Hüllenteils variiert.

12. Stift nach Anspruch 11, **dadurch gekennzeichnet, dass** das Treibmittel (10) Mikrosphären umfasst, deren Größe im expandierten Zustand zwischen 40 und 120 µm variiert.

13. Stift nach Anspruch 12, **dadurch gekennzeichnet, dass** das Treibmittel (10) Mikrosphären, deren Größe im expandierten Zustand etwa 80 µm beträgt, und Mikrosphären umfasst, deren Größe im expandierten Zustand etwa 120 µm beträgt.

14. Stift nach einem der Ansprüche 1 bis 13, **dadurch gekennzeichnet, dass** das Treibmittel (8) in das Material (7) des Minenteils (3) in einem Anteil eingebracht wird, der von 0,1 bis 1 Gew.% bezogen auf das Gesamtgewicht des Minenteils (3) variiert.

15. Stift nach Anspruch 14, **dadurch gekennzeichnet, dass** das Treibmittel (8) Mikrosphären umfasst, deren Größe im expandierten Zustand zwischen 20 und 40 µm variiert.

16. Stift nach Anspruch 2 und nach einem der Ansprüche 6 bis 15, **dadurch gekennzeichnet, dass** die Mine (4) eine sogenannte harte Mine ist.

17. Stift nach einem der Ansprüche 3 bis 15, **dadurch gekennzeichnet, dass** die Mine (4) eine sogenannte weiche Mine ist.

18. Verfahren zur Herstellung eines Stiftes nach Anspruch 2 und nach einem der Ansprüche 6 bis 16, **dadurch gekennzeichnet, dass** das oder die thermoplastischen Materialien (7) und das Treibmittel (8) der Mine (4) und das oder die thermoplastischen Materialien (9) und das Treibmittel (10) des Hüllenteils (2) um die Mine (4) herum coextrudiert werden.

19. Verfahren zur Herstellung eines Stiftes nach Anspruch 4 und nach einem der Ansprüche 3 bis 15 und 17, **dadurch gekennzeichnet, dass** das oder die verwendeten Materialien (7) und eventuell das Treibmittel (8) der Mine (4), das oder die verwendeten Materialien und das Treibmittel der Zwischenschicht (5) um die Mine (4) herum und das oder die verwendeten Materialien (9) und das Treibmittel (10) des Hüllenteils (2) um die Zwischenschicht (5) herum coextrudiert werden.

20. Verfahren zur Herstellung nach Anspruch 18 oder 19, **dadurch gekennzeichnet, dass** das oder die verwendeten Materialien der Mine und/oder des Hüllenteils und das oder die thermischen Treibmittel bei ähnlichen Temperaturen verwendet werden, wobei die Verwendungstemperatur des oder der verwendeten Materialien nicht höher als jene der Verwendung des oder der thermischen Treibmittel ist.

## Claims

1. Pencil (1) comprising a lead portion (3) comprising or consisting of a lead (4) and an envelope portion (2) surrounding the lead portion (3), said envelope portion (2) being made of an expanded synthetic material (9), **characterized in that** the lead portion (3) is at least partially expanded.

2. Pencil according to Claim 1, **characterized in that** the lead portion (3) consists of said lead (4) and is expanded.

3. Pencil according to Claim 1, **characterized in that** the lead portion (3) comprises said lead (4) and an intermediate layer (5) surrounding the lead (4), said intermediate layer (5) is made of a material based on an expanded synthetic polymer.

4. Pencil according to Claim 3, **characterized in that** said lead (4) is non-expanded.

5. Pencil according to Claim 3, **characterized in that** said lead (4) is expanded.

6. Pencil according to any one of Claims 1 to 5, **characterized in that** the lead (4) comprises graphite, clay and/or waxes.

7. Pencil according to any one of Claims 1 to 6, **characterized in that** at least the envelope portion (2) and possibly the intermediate layer (2) of the lead portion (3) are based on expanded thermoplastic materials.

8. Pencil according to any one of Claims 1 to 7, **characterized in that** the expanded portions are the result of the action of expansion agents chosen from among the closed-cell thermal expansion agents.

9. Pencil according to Claim 8, **characterized in that** the expansion agents are chosen from among the physical expansion agents.

10. Pencil according to Claim 9, **characterized in that** said expansion agents are chosen from among thermally expandable microspheres.

11. Pencil according to any one of Claims 1 to 10, **characterized in that** the expansion agent is introduced into the material of the envelope portion (2) in a proportion varying from 0.5 to 3% by weight, with respect to the total weight of the envelope portion.

12. Pencil according to Claim 11, **characterized in that** the expansion agent (10) comprises microspheres whose size, in the expanded state, varies from 40 to 120 µm.

13. Pencil according to Claim 12, **characterized in that** the expansion agent (10) comprises microspheres whose size, in the expanded state, is of the order of 80 µm and microspheres whose size, in the expanded state, is of the order of 120 µm.

14. Pencil according to any one of Claims 1 to 13, **characterized in that** the expansion agent (8) is introduced into the material (7) of the lead portion (3) in a proportion varying from 0.1 to 1% by weight, with respect to the total weight of the lead portion (3).

15. Pencil according to Claim 14, **characterized in that** the expansion agent (8) comprises microspheres whose size, in the expanded state, varies from 20 to 40 µm.

16. Pencil according to Claim 2 and any one of Claims 6 to 15, **characterized in that** the lead (4) is considered a hard lead.

17. Pencil according to any one of Claims 3 to 15, **characterized in that** the lead (4) is considered a black lead.

18. Method for producing a pencil according to Claim 2 and any one of Claims 6 to 16, **characterized in that** the thermoplastic material(s) (7) and the expansion agent (8) of the lead (4) and the thermoplastic material(s) (9) and the expansion agent (10) of the envelope portion (2) around the lead (4) are co-extruded.

19. Method for producing a pencil according to Claim 4 and any one of Claims 3 to 15 and 17, **characterized in that** the constituent material (s) (7) and possibly the expansion agent (8) of the lead (4), the constituent material(s) and the expansion agent of the intermediate layer (5) around the lead (4) and the constituent material (s) (9) and the expansion agent (10) of the envelope portion (2) around the intermediate layer (5) are co-extruded.

20. Production method according to Claim 18 or 19, **characterized in that** the constituent material (s) of the lead portion and/or of the envelope portion and the thermal expansion agent(s) are processed at similar temperatures, the processing temperature of the constituent material(s) being not greater than the processing temperature of the thermal expansion agent (s) .
